# EUROPEAN PATENT APPLICATION

(11) **EP 4 683 136 A1**
(43) Date of publication of application: **21.01.2026**
(21) Application number: 24742438.5
(22) Date of filing: 27.05.2024
(51) Int. Cl.: H01R 43/05, H01R 43/28, H01R 43/048, H02G 1/12

(54) **WIRE HARNESS PROCESSING APPARATUS**

(71) Applicant: Hacint Intelligence Technology Co., Ltd, Hebi, Henan 458030 (CN)
(72) Inventor: LI, Ming, Hebi, Henan 458030 (CN); WU, Jintao, Hebi, Henan 458030 (CN); HU, Dechao, Hebi, Henan 458030 (CN); ZHANG, Yongpeng, Hebi, Henan 458030 (CN); WANG, Yuanyuan, Hebi, Henan 458030 (CN)
(74) Representative: Ottazzo, Marco Francesco Agostino
(86) International application number: PCT/CN2024/095537
(87) International publication number: WO 2025/245668

(57) **Abstract**

The present invention provides a wire harness processing device and relates to the field of wire harness processing technologies. The wire harness processing device includes a first clamping assembly and a steering assembly, wherein the first clamping assembly is configured to be capable of clamping two wire harnesses; and the steering assembly is connected to the first clamping assembly, and the steering assembly is configured to be capable of driving the first clamping assembly to move along a predetermined track, and wherein movement of the first clamping assembly along the predetermined track is configured to enable movement paths of the two harnesses to have overlapping sections overlapping each other.

## Description

### TECHNICAL FIELD

The present invention relates to the field of wire harness processing technologies, and particularly to a wire harness processing device.

### BACKGROUND ART

In the related art, wire harness processing devices are used for performing transportation, cutting, peeling, threading, crimping and other technological processes successively on wire harnesses. However, the productivity of a single such wire harness processing device is low. The productivity of the wire harness processing device, particularly in a case where a large quantity of wire harnesses needs to be processed, cannot meet the requirement, and the overall productivity can be improved only by purchasing more wire harness processing devices, resulting in increased production costs.

### SUMMARY

Regarding this, in order to overcome the deficiencies in the prior art, the present invention aims at providing a wire harness processing device, which can effectively improve the productivity of single equipment, so as to satisfy the requirement of producing and processing a large quantity of wire harnesses and facilitate reducing the production costs.

The present invention provides the following technical solutions.

Embodiments of the present invention provide a wire harness processing device, wherein the wire harness processing device includes:
- a first clamping assembly, configured to be capable of clamping two wire harnesses; and
- a steering assembly, wherein the steering assembly is connected to the first clamping assembly, and the steering assembly is configured to be capable of driving the first clamping assembly to move along a predetermined track, and wherein movement of the first clamping assembly along the predetermined track is configured to enable movement paths of the two harnesses to have overlapping sections that overlap with each other.

In one of the embodiments, the wire harness processing device further includes:
- a pair of transporting assemblies, configured to be capable of transporting the wire harnesses respectively to the first clamping assembly, wherein transporting speeds of the transporting assemblies are adjustable.

In one of the embodiments, each of the transporting assemblies includes:
- a pair of rotating mechanisms, each having a rotating portion, wherein the rotating portion is capable of moving along a rotating path, and the rotating portion extends along the rotating path and is connected end to end, and wherein the rotating portions of the pair of rotating mechanisms are provided opposite to each other, so that a gap between the rotating portions of the pair of rotating mechanisms forms a transportation channel; and
- an adjusting mechanism, connected to at least one of the pair of rotating mechanisms, wherein the adjusting mechanism is configured to be capable of adjusting a distance between the pair of rotating mechanisms.

In one of the embodiments, the rotating mechanism includes:
- a belt transmission module, having a belt, wherein the belt constitutes the rotating portion; and
- a first driving module, connected to the belt transmission module, wherein the first driving module is configured to be capable of driving the belt to rotate along circumference thereof.

In one of the embodiments, the wire harness processing device includes a processing assembly, the processing assembly has an operation position, and the processing assembly is configured to be capable of processing the wire harness located in the operation position, wherein the operation position is located in the overlapping sections.

In one of the embodiments, the processing assembly includes:
- a cutting mechanism, having a first operation position, wherein the first operation position is capable of accommodating the two wire harnesses, and the cutting mechanism is capable of performing a cutting action on the pair of wire harnesses in the operation position.

In one of the embodiments, the cutting mechanism includes:
- a pair of first cutter modules, each having a cutting edge, wherein the cutting edges of the pair of first cutter modules are provided opposite to each other in a first direction, and the first operation position is formed between the pair of cutting edges; and
- a second driving module, connected to the pair of first cutter modules respectively, wherein the second driving module is capable of driving at least one of the pair of first cutter modules to move in an opposing direction between the pair of first cutter modules.

In one of the embodiments, the wire harness processing device further includes:
- a second clamping assembly, wherein the second clamping assembly and the first clamping assembly are located at two sides of the cutting mechanism respectively, and the second clamping assembly is configured to be capable of clamping the two wire harnesses clamped by the first clamping assembly; and
- a first pulling-back assembly, wherein the second clamping assembly is connected to the first pulling-back assembly, and the first pulling-back assembly is configured to be capable of driving the second clamping assembly to get away from or approach the cutting mechanism.

In one of the embodiments, the wire harness processing device further includes:
- a second pulling-back assembly, wherein the first clamping assembly is connected to the steering assembly through the second pulling-back assembly, and the second pulling-back assembly is configured to be capable of driving the first clamping assembly to get away from or approach the cutting mechanism.

In one of the embodiments, the processing assembly further includes:
- a pair of wire-striping mechanisms, wherein the pair of wire-striping mechanisms are located at two sides of the cutting mechanism respectively, wherein the pair of wire-striping mechanisms are arranged in parallel, and wherein the wire-striping mechanism includes a pair of second cutter modules, each having a wire-striping edge, wherein the wire-striping edges of the pair of second cutter modules are provided opposite to each other in the first direction; and
- a second driving module, connected to the pair of second cutter modules respectively, wherein the second driving module is capable of driving at least one of the pair of second cutter modules to move in the first direction.

In one of the embodiments, a pointed end is formed between adjacent wire-striping edges; and
- a distance between the pair of cutting edges is smaller than a distance between the pair of wire-striping edges.

In one of the embodiments, the processing assembly further includes:
- a threading mechanism, having a second operation position, wherein the threading mechanism is configured for sheathing a bolt at an end of the wire harness located in the second operation position; and
- a wire harness crimping mechanism, having a third operation position, wherein the wire harness crimping mechanism is configured for compressing the bolt sheathed at the end of the wire harness located in the third operation position,
and wherein the first operation position, the second operation position and the third operation position are provided in sequence along the overlapping sections.

In one of the embodiments, the first clamping assembly includes:
- a pair of first clamping jaws and a pair of second clamping jaws, wherein a first clamping channel is formed between the pair of first clamping claws, a second clamping channel is formed between the pair of second clamping claws, and the first clamping channel and the second clamping channel are provided in parallel; and
- a pair of first driving mechanisms, connected to the first clamping jaw and the second clamping jaw on a corresponding side, wherein each of the first driving mechanisms is capable of driving the first clamping jaw and the second clamping jaw that are connected thereto to move in a second direction, and the first direction and the second direction are both parallel to a cross section of the first clamping channel.

In one of the embodiments, the first driving mechanism includes:
- a first base, wherein the pair of first clamping jaws and the pair of second clamping jaws are all hinged to the first base, wherein first hinge points are formed between the first clamping jaws and the first base, second hinge points are formed between the second clamping jaws and the first base, and the first hinge points and the second hinge points are all located on a first predetermined axis, wherein the first predetermined axis is extended in a third direction, and the first direction and the third direction are perpendicular to each other; and the first base has a first guiding chute, the first guiding chute is extended along a first circular track, a center of the first circular path is located on the first predetermined axis, and the first circular path is perpendicular to the predetermined axis;
- a first adapter, having a second guiding chute, wherein the second guiding chute is extended in a fourth direction, and the first direction, the third direction and the fourth direction are perpendicular to each other;
- a first connecting portion, slidably fitted with the first guiding chute and the second guiding chute respectively, wherein the first connecting portion is rotatably connected to the first clamping jaw and the second clamping jaw on a corresponding side; and
- a first driving portion, wherein for the first driving portion and the first adapter, the first driving portion is configured to be capable of driving the first adapter to move in the first direction.

In one of the embodiments, the pair of first driving mechanisms share the first driving portion.

In one of the embodiments, the second clamping assembly includes:
- a wire separation slider, extended in the first direction, wherein one end of the wire separation slider facing the wire harness has a pointed end;
- a pair of third clamping jaws, located at two sides of the wire separation slider respectively;
- a second driving mechanism, connected to the wire separation slider, wherein the second driving mechanism is configured to be capable of driving the wire separation slider to move in the first direction; and
- a third driving mechanism, wherein the wire separation slider is connected to the clamping jaws through the third driving mechanism, and the third driving mechanism is configured to be capable of driving the clamping jaws to approach or get away from the wire separation slider.

In one of the embodiments, the third driving mechanism includes:
- a second base, wherein the third clamping jaws and the second base are hinged and form third hinge points, the third hinge points are all located on a second predetermined axis, and the second predetermined axis is extended in a fifth direction; the second base has a third guiding chute, the third guiding chute is extended along a second circular track, a center of the second circular path is located on the second predetermined axis, the second circular path is perpendicular to the second predetermined axis, and the first predetermined axis is perpendicular to the first direction;
- a second adapter, having a fourth guiding chute, wherein the fourth guiding chute is extended in a sixth direction, and the first direction, the fifth direction and the sixth direction are perpendicular to each other;
- a second connecting portion, slidably fitted with the third guiding chute and the fourth guiding chute respectively, wherein the second connecting portion is rotatably connected to the third clamping jaw on a corresponding side; and
- a second driving portion, wherein for the second driving portion and the second adapter, the second driving portion is configured to be capable of driving the second adapter to move in the first direction.

In one of the embodiments, the second driving mechanism includes:
- the second base, having a fifth guiding chute, wherein the fifth guiding chute is extended in the first direction, and the wire separation slider is slidably fitted with the fifth guiding chute; and the wire separating slider has a sixth guiding chute, the sixth guiding chute is extended in a sixth direction, and the second connecting portion is slidably fitted with the second guiding chute.

The embodiments of the present disclosure have the following advantages.

By using the wire harness processing device provided in the present invention, the first clamping assembly can be used to simultaneously clamp two wire harnesses, and the steering assembly cooperates with the first clamping assembly, to make movement tracks of the two wire harnesses clamped by the first clamping assembly have overlapping sections by controlling movement of the first clamping assembly, thereby ensuring that the two wire harnesses can undergo the same processing. Obviously, the present device can save the time for transporting the wire harnesses, further improve the processing efficiency of the wire harness processing device, and effectively improve the productivity of a single device, so as to satisfy the requirements on producing and processing a large quantity of wire harnesses and facilitate reducing the production costs. In addition, the present device can simultaneously clamp two wire harnesses as a foundation of a subsequent double-wire harness technology.

In order to make the above objectives, features and advantages of the present invention more apparent and understandable, preferred embodiments are specifically described below in detail in conjunction with drawings.

### BRIEF DESCRIPTION OF DRAWINGS

In order to more clearly illustrate technical solutions of embodiments of the present invention, drawings which need to be used in the embodiments will be introduced briefly below. It should be understood that the drawings merely show some embodiments of the present invention, and thus should not be considered as limitation to the scope. Those ordinarily skilled in the art still could obtain other relevant drawings according to these drawings, without using any inventive efforts.
FIG. 1 shows a structural schematic diagram of a wire harness processing device provided in embodiments of the present invention, from one viewing angle;
FIG. 2 shows a structural schematic diagram of the wire harness processing device provided in embodiments of the present invention, from another viewing angle;
FIG. 3 is an enlarged view of point A in FIG. 2;
FIG. 4 shows a structural schematic diagram of the wire harness processing device provided in embodiments of the present invention, from another viewing angle;
FIG. 5 shows a structural schematic diagram of the wire harness processing device provided in embodiments of the present invention, from another viewing angle;
FIG. 6 is an enlarged view of point B in FIG. 5;
FIG. 7 shows a structural schematic diagram of a first pulling-back assembly of the wire harness processing device provided in embodiments of the present invention;
FIG. 8 shows a structural schematic diagram of a first clamping assembly of the wire harness processing device provided in embodiments of the present invention;
FIG. 9 shows an exploded schematic diagram of the first clamping assembly of the wire harness processing device provided in embodiments of the present invention, from one viewing angle;
FIG. 10 shows an exploded schematic diagram of the first clamping assembly of the wire harness processing device provided in embodiments of the present invention, from another viewing angle;
FIG. 11 shows a structural schematic diagram of a second clamping assembly of the wire harness processing device provided in embodiments of the present invention;
FIG. 12 shows an exploded schematic diagram of the second clamping assembly of the wire harness processing device provided in embodiments of the present invention, from one viewing angle; and
FIG. 13 shows an exploded schematic diagram of the second clamping assembly of the wire harness processing device provided in embodiments of the present invention, from another viewing angle.

### DESCRIPTION OF MAIN REFERENCE NUMERALS

- 100: transporting assembly;
- 200: steering assembly;
- 300: first clamping assembly;
- 310: first base;
- 320: second guiding chute;
- 330: first driving portion;
- 340: first clamping jaw;
- 350: second clamping jaw;
- 360: first connecting portion;
- 370: first adapter;
- 380: first guiding chute;
- 400: cutting mechanism;
- 410: first cutter module;
- 420: second driving module;
- 500: second clamping assembly;
- 510: second driving portion;
- 520: second base;
- 521: fifth guiding chute;
- 522: third guiding chute;
- 530: third clamping jaw;
- 540: wire separation slider;
- 541: sixth guiding chute;
- 550: second adapter;
- 551: fourth guiding chute;
- 600: first pulling-back assembly;
- 700: wire harness;
- 800:second pulling-back assembly.

### DETAILED DESCRIPTION OF EMBODIMENTS

The embodiments of the present invention are described in detail below, and examples of the embodiments are shown in the drawings, wherein same or similar reference signs represent same or similar elements or elements having same or similar functions throughout the context. The embodiments described below with reference to the drawings are exemplary, merely for explaining the present invention, but should not be construed as limitation to the present invention.

It should be noted that when an element is referred to as "fixed" to another element, it may be directly on the another element or there may be an intermediate element therebetween. When one element is referred to as "connected" to another element, it may be directly connected to the another element or there may be an intermediate element therebetween. On the contrary, when an element is referred to as "directly" "on" another element, there is no intermediate element. The terms such as "perpendicular", "horizontal", "left", "right" and the like used herein are merely for illustrative purpose.

In the present invention, unless otherwise specified and defined explicitly, the terms such as "mount", "join", "connect", and "fix" should be construed in a broad sense, for example, a connection may be a fixed connection, a detachable connection, or an integral connection; it may be a mechanical connection, or also may be an electrical connection; it may be a direct connection, an indirect connection via an intermediary, or internal communication between two elements or interaction between two elements. For those ordinarily skilled in the art, specific meanings of the above terms in the present invention could be understood according to specific circumstances.

Besides, the terms "first" and "second" are merely for descriptive purpose, but should not be construed as indicating or implying importance in the relativity or implicitly indicating the number of a related technical feature. Thus, defining a feature with "first" or "second" may explicitly or implicitly mean that one or more such features are included. In the description of the present invention, "a plurality of" means two or more, unless otherwise defined explicitly.

Unless otherwise defined, all technical and scientific terms used herein have the same meanings as those commonly understood by those skilled in the art. The terms used herein in the template specification are for the purpose of describing specific embodiments only but not intended to limit the present invention. The term "and/or" used herein includes any and all combinations of one or more related listed items.

In the related art, the wire harness processing device is key equipment for automatically processing an electrical wire harness assembly. A series of technological steps are integrated thereto so as to efficiently and accurately complete preparation of wire harnesses. Specifically, the device involves several following core technological processes: 1. transportation: the wire harness processing device first automatically transports wire harnesses from a storage or loading area to a processing area through a transportation system. A belt conveyor, a chain, a roller or a more advanced rail system is generally used for the transportation to ensure stable transmission of the wire harnesses and reduce damage; 2. cutting: when arriving at the processing area, the wire harnesses will be precisely cut off according to requirement for a set length. A mechanical blade, laser or ultrasonic cutting technique may be used in this step, so as to ensure a neat and burr-free cutting edge and fast cutting; 3. peeling: insulation layer of cut wire harnesses needs to be partially or completely removed for junction. A special wire-striping tool, such as a rotary blade, a thermal peeler or a chemical wire-striping technology, is used in peeling step to accurately remove the insulation and ensure no damage to conductor; 4. threading: it refers to passing an uncovered conductor through a terminal, a connector or a fitting, such as an end and a pin. A threading process may be manual or fully automated, and a precision positioning tool is used to ensure proper and intact embedment of the conductor in the connector; and 5. crimping: crimping process ensures stable electrical and mechanical connection of the wire harnesses. By a crimping tool or a crimping machine, pressure is applied to a connector to form a permanent electrical connection. A crimping point should ensure good contact between the conductor and the connector, without gap, thus preventing looseness or too high resistance in the future. Automatic integration of these steps enables the wire harness processing device to become essential equipment with high efficiency and stable quality for wire harness processing in production lines of many industries such as automobiles, aerospace, electronics, household appliances, communications, and rail transit.

However, the productivity of a single such wire harness processing device is low. The productivity of the wire harness processing device, particularly in a case where a large quantity of wire harnesses needs to be processed, cannot meet the requirement, and the overall productivity can be improved only by purchasing more wire harness processing devices, resulting in increased production costs.

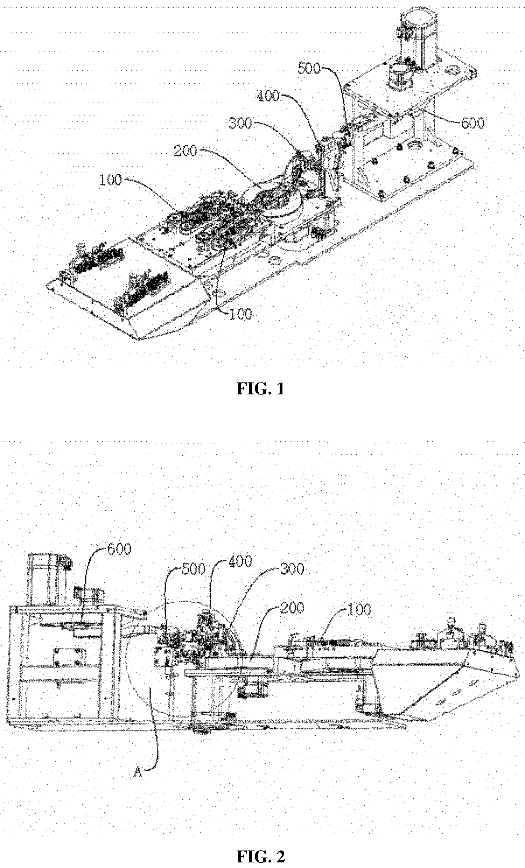

As shown in FIG. 1, FIG. 2 and FIG. 4, in order to solve the above technical problems, embodiments of the present invention provide a wire harness processing device. A wire harness 700 processing device includes a first clamping assembly 300 and a steering assembly 200, wherein the first clamping assembly 300 is configured to be capable of clamping two wire harnesses 700; and the steering assembly 200 is connected to the first clamping assembly 300, and the steering assembly 200 is configured to be capable of driving the first clamping assembly 300 to move along a predetermined track. In the above, movement of the first clamping assembly 300 along the predetermined track is configured to enable movement paths of the two harnesses 700 to have overlapping sections that overlap with each other.

In the present embodiment, the wire harness 700 processing device provided in the present invention can simultaneously clamp two wire harnesses 700, and through cooperation of the steering assembly 200 driving the first clamping assembly 300 to move along the predetermined track, the movement paths of the two wire harnesses 700 have overlapping parts, which are defined as the overlapping sections. That is to say, one wire harness 700 processing device can be used to process two wire harnesses 700 successively or simultaneously, thereby saving the time for transporting the wire harnesses 700.

It should be noted that, in the related art, it needs to complete the processing of a current wire harness 700 before transporting next wire harness 700, that is to say, this step is omitted in the present invention.

Exemplarily, the wire harness 700 processing device has a cutting assembly, that is to say, the cutting assembly cuts the wire harnesses 700. By applying the present embodiment, two wire harnesses 700 can be clamped by the first clamping assembly 300, wherein if the cutting assembly can simultaneously cut a plurality of wire harnesses 700, the first clamping assembly 300 can be driven by the steering assembly 200 to move, so that two wire harnesses 700 enter the cutting assembly and are simultaneously cut; if the cutting assembly can only cut a single wire harness 700, by controlling the steering assembly 200 to drive the first clamping assembly 300 to move, two wire harnesses 700 enter the cutting assembly successively, so that the two wire harnesses 700 are cut separately.

Obviously, compared with the method of processing a single wire harness 700 in the prior art, the two methods above have higher processing efficiency. This means that the processing efficiency is improved, and the methods are suitable for mass production and can simultaneously process double wire harnesses 700 that are the same or different, thus improving parallel processing capability of a production line.

Introduction of the steering assembly 200 enables the first clamping assembly 300 to move along the predetermined track, which is not merely a straight line, but also may include complex paths such as curves and bends, thus increasing the flexibility and adaptability of arrangement of the wire harnesses 700, and satisfying requirements on direction design of complex wire harnesses 700. By precisely controlling two wire harnesses 700 to move along predetermined tracks, their paths overlap in a certain section, i.e., overlapping sections, which design is used for a specific connection requirement, ensuring precision docking and connectivity of processing the two wire harnesses 700.

In addition, in the present embodiment, the first clamping assembly 300 can be used for clamping wire harnesses 700 of different specifications, and also for clamping wire harnesses 700 of the same specification. That is to say, when there is a large demand for wire harnesses 700 of a single specification, the first clamping assembly 300 can be used to clamp a pair of the same wire harnesses 700, to perform synchronous production and improve efficiency. Certainly, if there is a small demand for wire harnesses 700 of a single specification, a pair of wire harnesses 700 of different specifications can be clamped by the first clamping assembly 300, so as to make full use of resources.

By applying the wire harness processing device provided in the present invention, the first clamping assembly 300 can be used to simultaneously clamp two wire harnesses 700, and the steering assembly 200 cooperates with the first clamping assembly 300, so as to make movement tracks of the two wire harnesses 700 clamped by the first clamping assembly 300 have the overlapping sections by controlling movement of the first clamping assembly 300, thereby ensuring that the two wire harnesses 700 can undergo the same processing. Obviously, the present device can save the time for transporting the wire harnesses 700, and further improve the processing efficiency of the wire harness 700 processing device, and effectively improve the productivity of a single device, so as to satisfy the requirements on producing and processing a large quantity of wire harnesses 700, and facilitate reducing the production costs.

In addition, through innovative clamping and steering designs of the wire harness 700 processing device, efficient and precise wiring and combination of the wire harnesses 700 are realized, diverse requirements on wire harness 700 processing are met, and the flexibility and production efficiency of an automatic production line are improved.

Moreover, the present device can simultaneously clamp two wire harnesses as a foundation of a subsequent double-wire harness technology. The double-wire harness process generally refers to a technological processing method of simultaneously processing or combining two wires (such as electric wires, cables, optical fibers, ropes, and metal wires) in the manufacturing industry, so as to improve production efficiency, enhance product performance or realize a specific function.

Exemplarily, parallel production can improve efficiency, and implement simultaneous processing of two wires, such as stranding, weaving, winding, welding, and side-by-side wiring, which can improve yield, and is suitable for mass production.

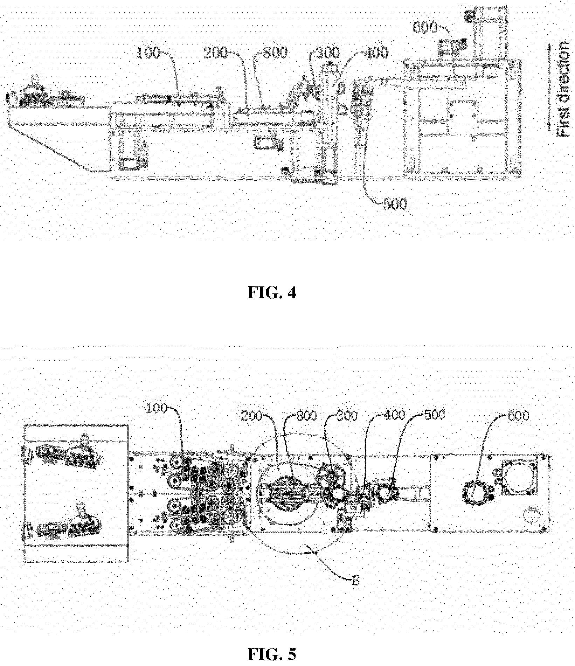

As shown in FIG. 1 and FIG. 5, in some embodiments, the wire harness 700 processing device further includes a pair of transporting assemblies 100, wherein the pair of transporting assemblies 100 are configured to be capable of transporting the wire harnesses 700 respectively to the first clamping assembly 300, and transporting speeds of the transporting assemblies 100 are adjustable.

That is to say, a pair of independent transporting assemblies 100 can transport the wire harnesses 700 respectively, and the pair of transporting assemblies 100 are configured to have an adjustable transporting speed, which increases the processing flexibility. In the above, the transporting speed being adjustable means that it can be adapted to wire harnesses 700 of different sizes, and tension of the wire harnesses 700 is kept consistent, thus avoiding damage and improving overall processing quality.

In other words, for example, when the wire harnesses 700 with different lengths are to be processed and cut, as the two wire harnesses 700 have different lengths, in order to ensure ends of the wire harnesses 700 to be flush, the pair of transporting assemblies 100 need to adopt different transporting speeds, to ensure cut ends of the two wire harnesses 700 to be flush, so as to avoid a case where after one wire harness 700 is cut, the length of the other wire harness 700 is adjusted for cutting, thus leading to higher overall operation efficiency.

As shown in FIG. 1 and FIG. 5, in some embodiments, the transporting assembly 100 includes a pair of rotating mechanisms and an adjusting mechanism, wherein the rotating mechanisms each have a rotating portion, the rotating portion can move along a rotating path, and the rotating portion extends along the rotating path and is connected end to end. In the above, the rotating portions of the pair of rotating mechanisms are provided opposite to each other, so that a gap between the rotating portions of the pair of rotating mechanisms forms a transportation channel. The adjusting mechanism is connected to at least one of the pair of rotating mechanisms, and the adjusting mechanism is configured to be capable of adjusting a distance between the pair of rotating mechanisms.

In the present embodiment, the rotating portion included in each rotating mechanism can move along a specific rotating path, and is connected end to end to form a continuous moving rail. Such design allows the rotating portion to move flexibly in a three-dimensional space, which increases flexibility of the transportation path, and is suitable for complex layout.

In the above, the rotating portions of the pair of rotating mechanisms are provided opposite to each other, and the gap therebetween forms one transportation channel. By ingeniously utilizing dynamic characteristic of the rotating mechanisms, such design naturally produces the moving paths of the wire harnesses 700, and reduces the need for an external complex transporting device. It should be noted that the wire harness 700 is clamped between a pair of rotating portions, so that the wire harness700 can be transported through rotation of the rotating portions, and moreover, by virtue of a clamping force of the pair of rotating portions on the wire harness 700, relative sliding between the wire harness 700 and the rotating portions, which causes inaccuracy of transportation length of the wire harness 700, is avoided.

In addition, the adjusting mechanism is connected to at least one rotating mechanism, and can adjust the distance between the rotating mechanisms. This means that a width of the transportation channel can be adjusted in real time according to the size of the wire harnesses 700, transportation requirements or technological requirements, thus improving adaptability and reducing friction or extrusion on the wire harnesses 700 during transportation.

Exemplarily, when the wire harnesses 700 with different wire diameters are to be transported, the distance between a pair of rotating portions can be adjusted according to the wire diameters of the wire harnesses 700, so as to match the wire harnesses 700 with the rotating portions. For example, when the wire diameter of the wire harnesses 700 to be transported becomes large, the distance between the pair of rotating portions is adjusted to be large by the adjusting mechanism; and if the wire diameter of the wire harnesses 700 to be transported becomes small, the distance between the pair of rotating portions is adjusted to be small by the adjusting mechanism.

Obviously, such configuration allows fine control over a transportation process, including guiding and speed of the wire harnesses 700. The introduction of the adjusting mechanism makes a whole transportation system have good adaptability, and be capable of quickly responding to production change, thus improving the processing precision and efficiency. Moreover, this design is adapted to the wire harnesses 700 of different sizes and shapes, and can also be flexibly adjusted in different technological stages, such as pretreating, assembling, cutting, connecting, etc. The time for adjusting equipment when the wire harnesses 700 are changed is reduced, and smoothness of the whole production line is improved.

Exemplarily, the adjusting mechanism is provided as an electric push rod, a pair of rotating mechanisms are mounted to a workbench, and the pair of rotating mechanisms are arranged in parallel on a surface of the workbench, wherein one rotating mechanism is connected to the workbench through the electric push rod, and the electric push rod can drive this rotating mechanism to approach or get away from the other rotating mechanism, thus achieving a purpose of adjusting the distance between the pair of rotating portions. Certainly, in other embodiments, the adjusting mechanism may also be an adjusting screw rod, a pneumatic cylinder, a hydraulic cylinder, or the like, which is not specifically limited herein.

Optionally, the rotating mechanism connected to the adjusting mechanism is connected to the workbench through a rail, further ensuring accuracy of positional adjustment of the rotating mechanism. Exemplarily, the rotating mechanism connected to the adjusting mechanism is mounted on a base, the base is connected to the workbench through the rail, the rail extends in an opposing direction between a pair of adjusting mechanisms, and the adjusting mechanisms can drive the rotating mechanisms connected thereto to move in the opposing direction so as to approach or get away from the other rotating mechanism.

As shown in FIG. 1 and FIG. 5, in some embodiments, the rotating mechanism includes a belt transmission module and a first driving module, wherein the belt transmission module has a belt, and the belt constitutes the rotating portion; and the first driving module is connected to the belt transmission module, and the first driving module is configured to be capable of driving the belt to rotate along circumference thereof.

In the present embodiment, the belt transmission module is a key part of the rotating mechanism, and its core lies in the belt used. As a flexible transmission element, the belt is designed to be of an annular structure and constitutes the rotating portion. In addition, a material of the belt is usually characterized by abrasion resistance and tensile resistance, to ensure stability and durability in continuous movement. Wrapping of the belt allows formation of a continuous rotating path, so that the wire harness 700 clamped by the belt can move along with rotation of the belt, thus achieving a transportation function.

Moreover, the first driving module is closely connected to the belt transmission module, and it provides a power source for the whole rotating mechanism. The first driving module is internally provided with a motor or other power driving devices, and can output a sufficient torque to drive the belt to continuously rotate along the circumference thereof. Furthermore, the first driving module can accurately regulate and control a rotational speed of the belt by a precision control system, such as a frequency convertible governor, so as to meet speed matching and control requirements under different transportation demands.

Obviously, cooperative operation of the belt transmission module and the first driving module ensures that the rotating mechanism can smoothly and continuously transport the wire harness 700, and realizes flexible control over the transportation process by adjusting output of the first driving module. Such a design not only improves transportation efficiency, but also enhances adaptability and stability of the system, and the modules are indispensable precision assemblies on an automatic production line.

Exemplarily, the belt transmission module includes a belt and a pair of pulleys, wherein the belt is sheathed on the pair of pulleys, and the first driving module is used for driving the pulleys to rotate.

As shown in FIG. 1, FIG. 3 and FIG. 5, in some embodiments, the wire harness 700 processing device includes a processing assembly, wherein the processing assembly has an operation position, and the processing assembly is configured to be capable of processing the wire harness 700 located in the operation position, wherein the operation position is located in the overlapping sections.

Integrated configuration of the processing assembly: the processing assembly, specifically designed for processing the wire harnesses 700, can perform various operations such as cutting, peeling, crimping, and threading, and its processing accuracy and efficiency are also particularly emphasized. This is directly related to quality of finished products and production rate.

In the above, the particularly referenced operation position, i.e., a specific position where the processing assembly operates, is directly located in the overlapping sections of the movement tracks of the wire harnesses 700. This means that a processing point is elaborately designed at an intersection where the two wire harnesses 700 overlap, so that the processing can be synchronized, the continuity of connection and processing can be improved, and subsequent steps can be reduced. In addition, by providing the operation position in the overlapping sections of the wire harnesses 700, this design realizes simultaneous or continuous processing of two wire harnesses 700, which is particularly suitable for connection points that require synchronous processing. This not only reduces manual intervention, but also improves processing accuracy, thus ensuring reliability and quality of connection of the wire harnesses 700.

In addition, accurate positioning of the operation position in the overlapping sections also means optimization of layout of the device, in which a natural gap on the paths of the wire harnesses 700 is utilized, and space occupied by the device is reduced. This is particularly important in the automatic production line, and means more compact and efficient use of space. The whole design exhibits highly automated logic, and the processing assembly is closely integrated with transportation, steering, and overlapping logics of the wire harnesses 700. This manifests the automation degree of design of the whole wire harness 700 processing device, suitable for large-scale efficient production, reducing human intervention, and improving production efficiency and consistency.

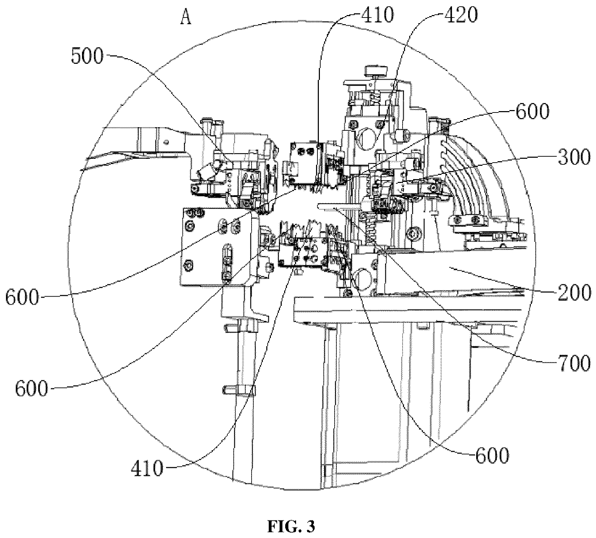

As shown in FIG. 3, in some embodiments, the processing assembly includes a cutting mechanism 400, wherein the cutting mechanism 400 has a first operation position which can accommodate two wire harnesses 700, and the cutting mechanism can perform a cutting action on the pair of wire harnesses 700 in the operation position.

In the present embodiment, particular emphasis is put on efficient parallel processing and flexibility. Exemplarily, regarding a cutting process of the wire harness 700, the processing assembly can simultaneously accommodate two wire harnesses 700, which means significant improvement on the processing efficiency. Particularly when processing a large quantity of wire harnesses 700, the number of times of processing a single wire harness is reduced, and throughput of the production line is increased.

Integration of the cutting mechanism 400 is a core of the design, which can directly perform the cutting action on the wire harness 700 in the operation position. The cutting mechanism 400 can accurately and quickly switch operation between two wire harnesses 700, thus realizing continuous efficient cutting and reducing waiting time.

Moreover, by precisely positioning the operation position for accommodating the wire hardness 700, accurate positioning and control are ensured, which is critical to certainty of accurate alignment before the cutting action, ensuring the cutting accuracy, avoiding damage to the wire harness 700, and improving the quality of finished products.

Moreover, the cutting mechanism 400 and the operation position accommodating two wire harnesses 700 are suitable for wire harnesses 700 of different sizes, lengths and materials, which enhance the adaptability of the production line of the wire harnesses 700, and can meet variable production requirements. It is to be noted that the cutting mechanism 400 is used for acquiring the wire harnesses 700 with a fixed length.

As shown in FIG. 3, in some embodiments, the cutting mechanism 400 includes a pair of first cutter modules 410 and a second driving module 420, wherein the first cutter modules 410 each have a cutting edge, and the cutting edges of the pair of first cutter modules 410 are provided opposite to each other in a first direction; the first operation position is formed between the pair of cutting edges, and the first operation position constitutes the operation position; the second driving module 420 is connected to the pair of first cutter modules 410 respectively, and the second driving module 420 can drive at least one of the pair of first cutter modules 410 to move in an opposing direction between the pair of first cutter modules 410.

In the present embodiment, two first cutter modules 410 are provided, and each first cutter module 410 is provided with the cutting edge, such a design can simultaneously act on two sides of the wire harness 700, thus improving cutting efficiency. The edges are provided opposite to each other in the first direction, meaning that they are arranged face to face, thus ensuring synchronism and symmetry of the cutting.

A gap, i.e., the first operation position, herein a region where the wire harnesses 700 are actually cut, is formed between the cutting edges of the pair of first cutter modules 410. Such a design ensures accurate positioning of the wire harnesses 700, and facilitates control over the cutting process and the quality of finished products.

In the above, each first cutter module 410 is connected to the second driving module 420. The second driving module 420 is a power core, controlling movement of the first cutter module 410. It not only coordinates movement of the cutter, but also can adjust the movement of at least one cutter module as required, thus ensuring dynamic adjustment and flexibility of opposing direction. Moreover, the second driving module 420 drives the first cutter module 410 to move in the opposing direction, which ensures precise control over the cutting, possible linearly or following a specific path, and is suitable for layout of complex wire harnesses 700. The control over movement is critical to cutting precision and efficiency, reduces unqualified products, and improves overall production performance.

Exemplarily, the first cutter module 410 includes a cutting knife, and the second driving module 420 includes a bidirectional screw rod, a pair of nut seats and a driving motor. The pair of nut seats are threadedly connected to two ends of the bidirectional screw rod respectively. A main shaft of the driving motor is connected to the bidirectional screw rod, and can further drive the bidirectional screw rod to rotate. In the above, the pair of nut seats are respectively connected to the cutting knife. During operation, the driving motor is used to drive the bidirectional screw rod to rotate, so as to be capable of driving a pair of cutting knifes to move in the first direction, thus driving the pair of cutting knifes to approach or get away from each other.

Alternatively, in other embodiments, the first cutter module 410 includes a cutting knife, and the second driving module 420 includes a one-way screw rod, a nut seat and a driving motor. The nut seat is threadedly connected to the one-way screw rod. A main shaft of the driving motor is connected to the one-way screw rod. In the above, the nut seat is connected to one of the cutting knifes, and the other cutting knife is fixed in position. During operation, the driving motor is used to drive the one-way screw rod to rotate, so as to be capable of driving the cutting knifes to move in the first direction, thus driving the pair of cutting knifes to approach or get away from each other.

Exemplarily, the first direction is a vertical direction. Alternatively, in other embodiments, the first direction may also be a horizontal direction.

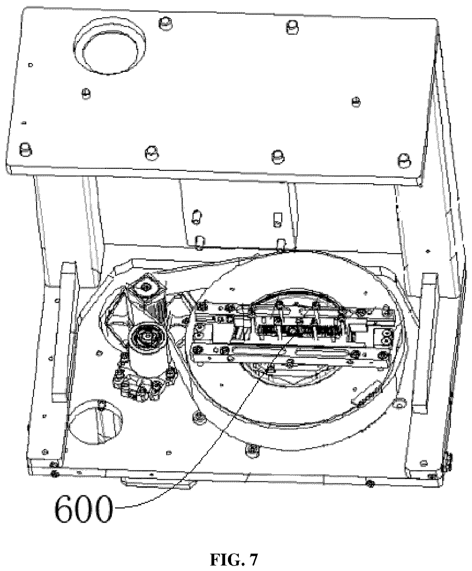

As shown in FIG. 1, FIG. 2, FIG. 4 and FIG. 7, in some embodiments, the wire harness 700 processing device further includes a second clamping assembly 500 and a first pulling-back assembly 600, wherein the second clamping assembly 500 and the first clamping assembly 300 are located at two sides of the cutting mechanism 400 respectively, and the second clamping assembly 500 is configured to be capable of clamping the two wire harnesses 700 clamped by the first clamping assembly 300; the second clamping assembly 500 is connected to the first pulling-back assembly 600, and the first pulling-back assembly 600 is configured to be capable of driving the second clamping assembly 500 to get away from or approach the cutting mechanism 400.

In the present embodiment, two-side cooperative clamping is adopted, that is, the second clamping assembly 500 and the first clamping assembly 300 are located at two sides of the cutting mechanism 400 respectively, and such symmetrical layout ensures balance of and control over the wire harness 700. The second clamping assembly 500 can clamp the two wire harnesses 700 having been secured by the first clamping assembly 300, and such handover ensures stable transition of the wire harnesses 700 in subsequent operations.

In addition, the second clamping assembly 500 is connected to the first pulling-back assembly 600 which has a function of dynamically adjusting a position of the second clamping assembly 500. The second clamping assembly 500 can be driven to get away from or approach the cutting mechanism 400, which is critical in practical operation, such as ensuring proper alignment of the wire harness 700 prior to cutting, or releasing the wire harness 700 after cutting, thus improving efficiency.

It is easy to understand that a cutting cooperation flow is provided: before cutting, the second clamping assembly 500 approaches and clamps the wire harness 700 for fixing, and the first pulling-back assembly 600 drives the second clamping assembly 500 to get away from the cutting mechanism 400, thereby keeping the wire harness 700 straight and ensuring accuracy of a cutting position. After the cutting is completed, the first pulling-back assembly 600 drives the second clamping assembly 500 to get away, which releases the wire harness 700 having been cut, facilitates subsequent processing or material removal, reduces manual operations, and improves the continuity. Obviously, such a design emphasizes precise control over the wire harness 700, and all steps, from fixing and cutting to releasing, are automatically adjusted mechanically, thus reducing human errors and ensuring cutting accuracy and production quality. This cutting cooperation flow is particularly suitable for high precision wire harness 700 processing, such as in electronics, automobiles, and aerospace.

Exemplarily, the first pulling-back assembly 600 includes a first linear movement module, wherein the first linear movement module may be a screw rod-type linear module, a linear motor-type linear module, a gear-rack-type linear module, a cylinder driving-type linear module, and the like, which is not specifically limited herein.

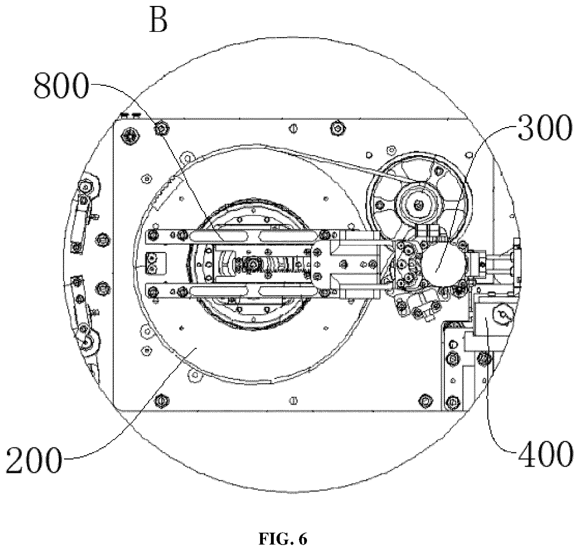

As shown in FIG. 5 and FIG. 6, in some embodiments, the wire harness 700 processing device further includes a second pulling-back assembly 800, the first clamping assembly 300 is connected to the steering assembly 200 through the second pulling-back assembly 800, and the second pulling-back assembly 800 is configured to be capable of driving the first clamping assembly 300 to get away from or approach the cutting mechanism 400.

The second pulling-back assembly 800 is connected to the first clamping assembly 300 through the steering assembly 200, so as to form a set of dynamic adjustment system. Such a connection allows accurate control over the first clamping assembly 300 during processing, not only for fixing position, but also dynamical adjustment of moving direction and distance. Exemplarily, the second pulling-back assembly 800 can drive the first clamping assembly 300 to move, so as to insert or remove two wire harnesses 700 into or from the processing assembly. Meanwhile, during the cutting, the wire harness 700 can be tightly pulled with cooperation of the second pulling-back assembly 500, thus ensuring accuracy of the cutting position and consistency of the wire harness 700 processing, and improving the quality of finished products.

Exemplarily, the second pulling-back assembly 800 includes a second linear movement module, wherein the second linear movement module may be a screw rod-type linear module, a linear motor-type linear module, a gear-rack-type linear module, a cylinder driving-type linear module, and the like, which is not specifically limited herein.

It should be noted that, if the steering assembly 200 drives the first clamping assembly 300 to move along a third circular track, the second pulling-back assembly 800 is used to control the first clamping assembly 300 to move radially along the third circular track, thereby ensuring the two wire harnesses 700 to have the overlapping sections.

Exemplarily, the third circular track is located in a horizontal plane, that is to say, the steering assembly 200 drives the first clamping assembly 300 to move in the horizontal plane.

As shown in FIG. 3, in some embodiments, the processing assembly further includes a pair of wire-striping mechanisms and a second driving module 420, wherein the pair of wire-striping mechanisms are located at two sides of the cutting mechanism 400 respectively, and the pair of wire-striping mechanisms are arranged in parallel. In the above, the wire-striping mechanism includes a pair of second cutter modules, the second cutter modules each have a wire-striping edge, and the wire-striping edges of the pair of second cutter modules are provided opposite to each other in the first direction; the second driving module 420 is connected to the pair of second cutter modules respectively, and the second driving module 420 can drive at least one of the pair of second cutter modules to move in the first direction.

In the present embodiment, a pair of wire-striping mechanisms are provided at two sides of the cutting mechanism 400 to form a parallel layout, which optimizes the processing flow, facilitates immediate striping after simultaneous processing of cutting of the wire harnesses 700, reduces transfer steps, and improves efficiency.

In the above, each wire-striping mechanism is provided with the second cutter modules, which are provided with the wire-striping edge. Such a design is specially designed for striping an insulation layer, and ensures cutting accuracy without damage to conductor. A pair of wire-striping edges are provided opposite to each other, to ensure symmetrical and precise wire-striping. Moreover, each second cutter module is connected to the second driving module 420 to provide independent or coordinated control. The design in which one cutter module can be driven to move or two cutter modules move simultaneously is flexibly adapted to different wire harness 700 specifications, and improves processing speed and precision.

It should be noted that, the second driving module 420 moves the second cutter module in the first direction, which controls striping depth and position and ensures accuracy of a striping process. The processing assembly implements automatic processing of cutting the wire harness 700 and stripping two ends of the wire harness 700, thus improving processing accuracy and efficiency, and being adapted to mass production demand.

Exemplarily, the second driving module 420 is provided as the first driving module, that is, the two are the same component, which can save costs and reduce components used. Certainly, it is also feasible that the second driving module 420 is provided to be of the same structure as the first driving module, that is, the whole device uses two first driving modules. Moreover, as the first driving module has been described above, it is not described again.

As shown in FIG. 3, in some embodiments, a pointed end is formed between adjacent wire-striping edges on the same second cutter module.

Exemplarily, the wire-striping mechanism can perform wire-stripping processing simultaneously on a pair of wire harnesses 700. Generally, the wire-striping edge is provided in a semi-arc shape, so that after a pair of second cutter modules are put together, a pair of wire-striping edges can form a round shape to cut rubber layers outside the wire harnesses 700, and through cooperation of the first pulling-back assembly 600 and the second pulling-back assembly 800, the rubber layers are detached from the wire harnesses 700.

In the above, the pointed end facilitates separation of the two wire harnesses 700 so as to guide them into different wire-striping edges.

It is easy to understand that each second cutter module has two wire-striping edges, and further the wire-striping edges on a pair of second cutter modules are provided in one-to-one correspondence.

On the basis of the above embodiment, a distance between the pair of cutting edges is smaller than a distance between the pair of wire-striping edges.

That is to say, with this structural configuration, a cable can be cut first and then wire-stripped by the wire-striping edge.

Exemplarily, the second cutter module includes a wire-striping blade, wherein the wire-striping blade has two wire-striping edges, so that the edges of the wire-striping blade form a W shape.

In some embodiments, the processing assembly further includes: a threading mechanism, wherein the threading mechanism has a second operation position, and the threading mechanism is used for sheathing a bolt at an end of the wire harness 700 located in the second operation position; and a wire harness 700 crimping mechanism, wherein the wire harness crimping mechanism has a third operation position, and the wire harness crimping mechanism is used for compressing the bolt sheathed at the end of the wire harness 700 located in the third operation position. In the above, the first operation position, the second operation position and the third operation position are provided in sequence along the overlapping sections.

That is to say, the operation position includes the first operation position, the second operation position and the third operation position; and the processing assembly includes the cutting mechanism 400, the threading mechanism and the wire harness crimping mechanism.

In the present embodiment, the threading mechanism is specifically provided with the second operation position, to directly process the end of the wire harness 700. By sheathing the bolt, which step is crucial in automation, accurate installation of fasteners, such as connectors, pins and terminals, of the wire harness 700 is ensured.

The wire harness 700 crimping mechanism is immediately behind the threading mechanism. The wire harness crimping mechanism is provided with the third operation position and is responsible for compressing the bolt at the end of the wire harness 700, which is critical for ensuring connection stability, electrical continuity and mechanical strength. Through precise force control, the crimping ensures a tight connection of the bolt with the wire harness 700.

In the above, the first operation position, the second operation position, and the third operation position are arranged in sequence along the overlapping sections of the wire harnesses 700, which means that the process from cutting, threading to crimping on the wire harness 700 is performed on a continuous coordinated path, thus reducing the transportation, optimizing the flow, and improving the efficiency and accuracy.

In addition, this design ensures accurate positioning in each step from cutting to threading and crimping, reducing errors, and ensuring the processing quality of the wire harnesses 700. The continuous configuration and close connection of each stage improve automation controllability.

Exemplarily, the steering assembly 200 drives the first clamping assembly 300 to move along the third circular track, and the first operation position, the second operation position and the third operation position are arranged in sequence along the third circular track.

Certainly, they are not limited to the above embodiments. In other embodiments, it is also feasible that only the threading mechanism or the wire harness crimping mechanism is provided, or other processing mechanisms are provided.

Meanwhile, the first operation position, the second operation position and the third operation position may be provided in sequence along the third circular track, and may also be provided in other placement orders, as long as all of the first operation position, the second operation position and the third operation position are ensured to be located on the third circular track.

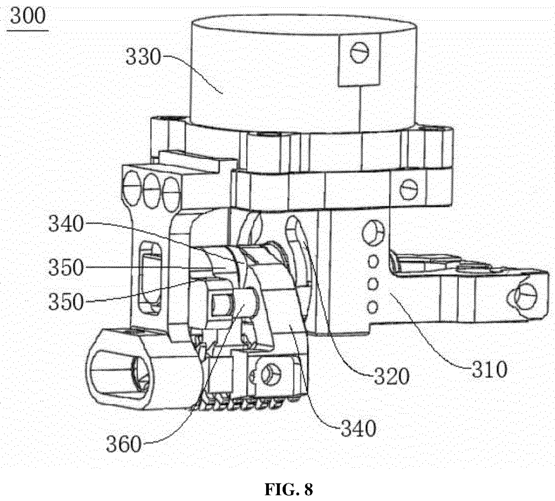

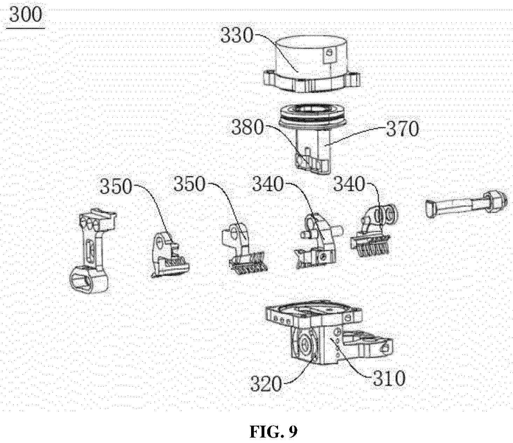

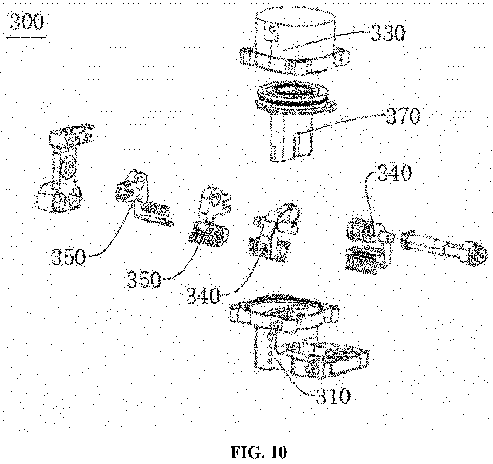

As shown in FIG. 8, FIG. 9 and FIG. 10, in some embodiments, the first clamping assembly 300 includes a pair of first clamping jaws 340, a pair of second clamping jaws 350 and a pair of first driving mechanisms, wherein a first clamping channel is formed between the pair of first clamping claws 340, a second clamping channel is formed between the pair of second clamping claws 350, and the first clamping channel and the second clamping channel are provided in parallel; each first driving mechanism is connected to the first clamping jaw 340 and the second clamping jaw 350 on a corresponding side, and each first driving mechanism can drive the first clamping jaw 340 and the second clamping jaw 350 that are connected thereto to move in a second direction. The first direction and the second direction are both parallel to a cross section of the first clamping channel.

In the present embodiment, a double-channel design is adopted, that is, a pair of first clamping jaws 340 and a pair of second clamping jaws 350 respectively form the first clamping channel and the second clamping channel, which are provided in parallel. Such a double-channel design can be adapted to the wire harnesses 700 of different sizes and shapes, or simultaneously process two wire harnesses 700, thus improving the efficiency.

The first clamping channel and the second clamping channel are parallel to the cross section of the wire harnesses 700, so as to ensure stable and damage-free clamping of the wire harnesses 700; and the positioning is accurate, which facilitates subsequent processing, such as cutting, threading, and crimping.

In the above, each pair of first clamping jaws 340 and second clamping jaws 350 are connected by corresponding first driving mechanism, and each first driving mechanism can independently control the first clamping jaw 340 and the second clamping jaw 350 that are connected thereto to move in the second direction, so as to realize closing or opening of a pair of first clamping jaws 340, and control a pair of second clamping jaws 350 to close or open.

In addition, the first direction and the second direction are both parallel to the cross section of the first clamping channel, which ensures clamping stability, controls the accuracy of the wire harness 700 when moving, reduces deviation and displacement, and improves the overall processing accuracy.

Obviously, the flexibility of such design lies in adaptability to various sizes of the wire harnesses 700, the double channels provided side by side can process simultaneously, and the independent control over a pair of first driving mechanisms provides processing flexibility.

As shown in FIG. 8, FIG. 9 and FIG. 10, in some embodiments, the first driving mechanism includes a first base 310, a first adapter 370, a first connecting portion 360 and a first driving portion 330. A pair of first clamping jaws 340 and a pair of second clamping jaws 350 are all hinged to the first base 310. A first hinge point is formed between the first clamping jaws 340 and the first base 310. A second hinge point is formed between the second clamping jaws 350 and the first base 310. The first hinge point and the second hinge point are both located on a first predetermined axis. The first predetermined axis is provided to extend in a third direction, and the first direction and the third direction are perpendicular to each other. The first base 310 has a first guiding chute 380, the first guiding chute 380 is provided to extend along a first circular track, a center of the first circular path is located on the first predetermined axis, and the first circular path is provided to be perpendicular to the predetermined axis. The first adapter 370 has a second guiding chute 320, and the second guiding chute 320 is provided to extend in a fourth direction. The first direction, the third direction and the fourth direction are perpendicular to each other. The first connecting portion 360 is slidably fitted with the first guiding chute 380 and the second guiding chute 320 respectively, and the first connecting portion 360 is rotatably connected to the first clamping jaw 340 and the second clamping jaw 350 on a corresponding side. As for the first driving portion 330 and the first adapter 370, the first driving portion 330 is configured to be capable of driving the first adapter 370 to move in the first direction.

That is to say, through driving the first adapter 370 to move in the first direction by the first driving portion 330, the first connecting portion 360 can be driven to move along the second guiding chute 320 and the first guiding chute 380, so that the first clamping jaw 340 and the second clamping jaw 350 that are connected thereto can be driven to rotate around the first predetermined axis. Thus, it can be realized that a pair of first driving mechanisms can control a pair of first clamping jaws 340 to close or open, and a pair of second clamping jaws 350 to close or open.

Exemplarily, the first driving portion 330 is fixed to the first base 310, the first driving portion 330 has a first extension end, and the first extension end is connected to a second adapter portion.

Exemplarily, the first driving portion 330 is a pneumatic cylinder. Certainly, in other embodiments, the first driving portion 330 may also be an electric push rod, a hydraulic cylinder, or the like, which is not specifically limited herein.

Exemplarily, the first connecting portion 360 is a rod part, and the first connecting portion 360 is passes through the second guiding chute 320 and the first guiding chute 380. Alternatively, a first slider is slidably fitted in the first guiding chute 380, a second slider is fitted in the second guiding chute 320, and the first connecting portion 360 is connected to the first slider and the second slider respectively.

As shown in FIG. 8, FIG. 9 and FIG. 10, in some embodiments, a pair of first driving mechanisms share one first driving portion 330.

That is, two first adapter portions of the two first driving mechanisms are fixedly connected, and the first driving portion 330 is simultaneously connected to the two first adapter portions, so that a weight of the first clamping assembly 300 can be reduced, thus facilitating reducing movement inertia and accurately controlling a stop position.

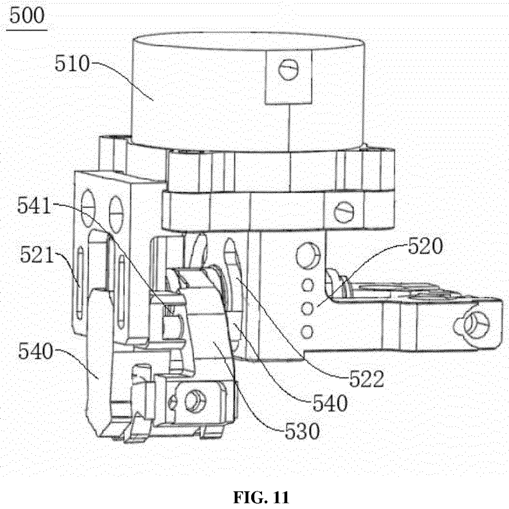

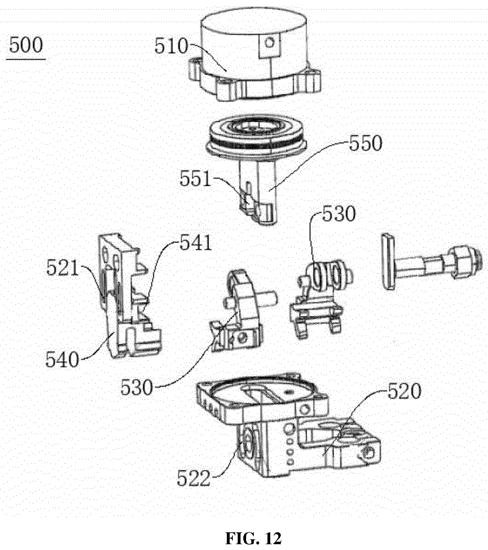

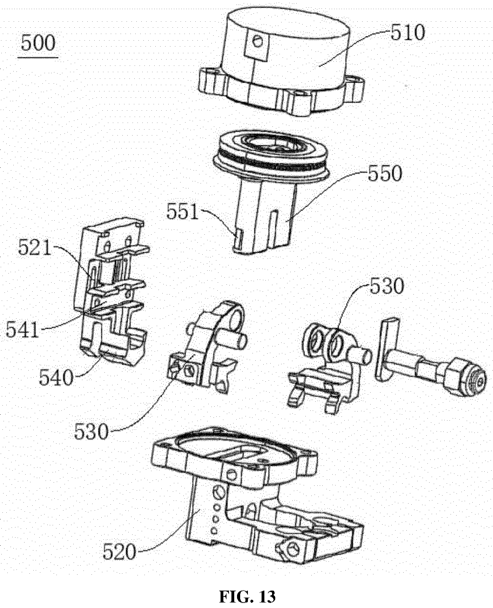

As shown in FIG. 11, FIG. 12 and FIG. 13, in some embodiments, the second clamping assembly 500 includes a wire separation slider 540, a pair of third clamping jaws 530, a second driving mechanism and a third driving mechanism, wherein the wire separation slider 540 is provided to extend in the first direction, and one end of the wire separation slider 540 facing the wire harness 700 has a pointed end; the pair of third clamping jaws 530 are located at two sides of the wire separation slider 540 respectively; the second driving mechanism is connected to the wire separation slider 540, and the second driving mechanism is configured to be capable of driving the wire separation slider 540 to move in the first direction; and the wire separation slider 540 is connected to the clamping jaws through the third driving mechanism, and the third driving mechanism is configured to be capable of driving the clamping jaws to approach or get away from the wire separation slider 540.

In the present embodiment, after the transporting assembly 100 transports the wire harnesses 700 to pass through the cutting mechanism 400, the first clamping assembly 300 tightly clamps the pair of wire harnesses 700. The second clamping assembly 500 uses the second driving mechanism to drive the wire separation slider 540 to move towards the pair of wire harnesses 700, so as to separate the pair of wire harnesses 700 by the wire separation slider 540; and uses the third driving mechanism to drive the pair of third clamping jaws 530 to approach the wire separation slider 540, so as to stably clamp the pair of wire harnesses 700.

As shown in FIG. 11, FIG. 12 and FIG. 13, in some embodiments, the third driving mechanism includes a second base 520, a second adapter 550, a second connecting portion and a second driving portion 510. The third clamping jaws 530 and the second base 520 are hinged and form a third hinge point, the third hinge point is located on a second predetermined axis, and the second predetermined axis is provided to extend in a fifth direction. The second base 520 has a third guiding chute 522, the third guiding chute 522 is provided to extend along a second circular track, a center of the second circular path is located on the second predetermined axis, the second circular path is provided to be perpendicular to the second predetermined axis, and the first predetermined axis is perpendicular to the first direction. The second adapter 550 has a fourth guiding chute 551, the fourth guiding chute 551 is provided to extend in a sixth direction, and the first direction, the fifth direction and the sixth direction are perpendicular to each other. The second connecting portion is slidably fitted with the third guiding chute 552 and the fourth guiding chute 551 respectively, and the second connecting portion is rotatably connected to the third clamping jaw 530 on a corresponding side. As for the second driving portion 510 and the second adapter 550, the second driving portion 510 is configured to be capable of driving the second adapter 550 to move in the first direction.

In the present embodiment, the second driving portion 510 is fixed to the second base 520, the second driving portion 510 drives the second adapter 550 to move in the first direction, and further through cooperation of the third guiding chute 522 with the fourth guiding chute 551, linear movement of the second adapter 550 can be converted into an action of driving the third clamping jaw 530 to approach or get away from the wire separation slider 540.

Exemplarily, the second driving portion 510 is a pneumatic cylinder. Certainly, in other embodiments, the second driving portion may also be an electric push rod, a hydraulic cylinder, or the like, which is not specifically limited herein.

Exemplarily, the second connecting portion is a rod part, and the second connecting portion passes through the third guiding chute 522 and the fourth guiding chute 551. Alternatively, a third slider is slidably fitted in the third guiding chute 522, a fourth slider is fitted in the fourth guiding chute 551, and the second connecting portion is connected to the third slider and the fourth slider respectively.

As shown in FIG. 11, FIG. 12 and FIG. 13, in some embodiments, the second driving mechanism includes a second base 520, wherein the second base 520 has a fifth guiding chute 521, the fifth guiding chute 521 is provided to extend in the first direction, and the wire separation slider 540 is slidably fitted with the fifth guiding chute 521; and the wire separating slider 540 has a sixth guiding chute 541, the sixth guiding chute 541 is provided to extend in a sixth direction, and the second connecting portion is slidably fitted with the second guiding chute 320.

In the present embodiment, the second connecting portion can realize linkage with the wire separation slider 540 without adding an extra power part. Specifically, lifting of the second connecting portion can drive the third clamping jaws 530 to approach or get away from the wire separation slider 540, and also can drive the wire separation slider 540 to lift and lower.

In all examples shown and described herein, any specific value should be explained as merely illustrative, rather than restrictive; therefore, other examples of the exemplary embodiments may have different values.

It should be noted that like reference signs and letters represent like items in the drawings, and thus, once a certain item is defined in one drawing, it does not need to be further defined or explained in subsequent drawings.

The above embodiments are merely several embodiments of the present invention, of which the description is relatively specific and detailed, but they should not be thus construed as limitation on the scope of the present invention. It should be indicated that those ordinarily skilled in the art could further make several modifications and improvements without departing from the concept of the present invention, all of which fall within the scope of protection of the present invention.

## Claims

1. A wire harness processing device, **characterized in that** the wire harness processing device comprises:
- a first clamping assembly, configured to be capable of clamping two wire harnesses; and
- a steering assembly, connected to the first clamping assembly, and the steering assembly is configured to be capable of driving the first clamping assembly to move along a predetermined track, wherein movement of the first clamping assembly along the predetermined track is configured to enable movement paths of the two harnesses to have overlapping sections that overlap with each other.

2. The wire harness processing device according to claim 1, **characterized in that** the wire harness processing device further comprises:
- a pair of transporting assemblies, configured to be capable of transporting the wire harnesses respectively to the first clamping assembly, wherein transporting speeds of the transporting assemblies are adjustable.

3. The wire harness processing device according to claim 2, **characterized in that** the transporting assembly comprises:
- a pair of rotating mechanisms, each having a rotating portion, wherein the rotating portion is capable of moving along a rotating path, and the rotating portion extends along the rotating path and is connected end to end, and wherein the rotating portions of the pair of rotating mechanisms are provided opposite to each other, so that a gap between the rotating portions of the pair of rotating mechanisms forms a transportation channel; and
- an adjusting mechanism, connected to at least one of the pair of rotating mechanisms, wherein the adjusting mechanism is configured to be capable of adjusting a distance between the pair of rotating mechanisms.

4. The wire harness processing device according to claim 3, **characterized in that** the rotating mechanism comprises:
- a belt transmission module, having a belt, wherein the belt constitutes the rotating portion; and
- a first driving module, connected to the belt transmission module, wherein the first driving module is configured to be capable of driving the belt to rotate along circumference thereof.

5. The wire harness processing device according to claim 1, **characterized in that** the wire harness processing device comprises a processing assembly, the processing assembly has an operation position, and the processing assembly is configured to be capable of processing the wire harness located in the operation position, wherein the operation position is located in the overlapping sections.

6. The wire harness processing device according to claim 5, **characterized in that** the processing assembly comprises:
- a cutting mechanism, having a first operation position, wherein the first operation position is capable of accommodating the two wire harnesses, and the cutting mechanism is capable of performing a cutting action on the pair of wire harnesses in the operation position.

7. The wire harness processing device according to claim 6, **characterized in that** the cutting mechanism comprises:
- a pair of first cutter modules, each having a cutting edge, wherein the cutting edges of the pair of first cutter modules are provided opposite to each other in a first direction, and the first operation position is formed between the pair of cutting edges; and
- a second driving module, connected to the pair of first cutter modules respectively, wherein the second driving module is capable of driving at least one of the pair of first cutter modules to move in an opposing direction between the pair of first cutter modules.

8. The wire harness processing device according to claim 7, **characterized in that** the wire harness processing device further comprises:
- a second clamping assembly, wherein the second clamping assembly and the first clamping assembly are located at two sides of the cutting mechanism respectively, and the second clamping assembly is configured to be capable of clamping the two wire harnesses clamped by the first clamping assembly; and
- a first pulling-back assembly, wherein the second clamping assembly is connected to the first pulling-back assembly, and the first pulling-back assembly is configured to be capable of driving the second clamping assembly to get away from or approach the cutting mechanism.

9. The wire harness processing device according to claim 8, **characterized in that** the wire harness processing device further comprises:
- a second pulling-back assembly, wherein the first clamping assembly is connected to the steering assembly through the second pulling-back assembly, and the second pulling-back assembly is configured to be capable of driving the first clamping assembly to get away from or approach the cutting mechanism.

10. The wire harness processing device according to claim 9, **characterized in that** the processing assembly further comprises:
- a pair of wire-striping mechanisms, located at two sides of the cutting mechanism respectively, wherein the pair of wire-striping mechanisms are arranged in parallel, and wherein the wire-striping mechanism comprises a pair of second cutter modules, each having a wire-striping edge, wherein the wire-striping edges of the pair of second cutter modules are provided opposite to each other in the first direction; and
- a second driving module, connected to the pair of second cutter modules respectively, wherein the second driving module is capable of driving at least one of the pair of second cutter modules to move in the first direction.

11. The wire harness processing device according to claim 10, **characterized in that**:
- a pointed end is formed between adjacent wire-striping edges; and
- a distance between the pair of cutting edges is smaller than a distance between the pair of wire-striping edges.

12. The wire harness processing device according to claim 11, **characterized in that** the processing assembly further comprises:
- a threading mechanism, having a second operation position, wherein the threading mechanism is configured for sheathing a bolt at an end of the wire harness located in the second operation position; and
- a wire harness crimping mechanism, having a third operation position, wherein the wire harness crimping mechanism is configured for compressing the bolt sheathed at the end of the wire harness located in the third operation position, and wherein the first operation position, the second operation position and the third operation position are provided in sequence along the overlapping sections.

13. The wire harness processing device according to any one of claims 8 to 12, **characterized in that** the first clamping assembly comprises:
- a pair of first clamping jaws and a pair of second clamping jaws, wherein a first clamping channel is formed between the pair of first clamping claws, a second clamping channel is formed between the pair of second clamping claws, and the first clamping channel and the second clamping channel are provided in parallel; and
- a pair of first driving mechanisms, connected to the first clamping jaw and the second clamping jaw on a corresponding side, wherein each of the first driving mechanisms is capable of driving the first clamping jaw and the second clamping jaw that are connected thereto to move in a second direction, and the first direction and the second direction are both parallel to a cross section of the first clamping channel.

14. The wire harness processing device according to claim 13, **characterized in that** the first driving mechanism comprises:
- a first base, wherein the pair of first clamping jaws and the pair of second clamping jaws are all hinged to the first base, wherein first hinge points are formed between the first clamping jaws and the first base, second hinge points are formed between the second clamping jaws and the first base, and the first hinge points and the second hinge points are all located on a first predetermined axis, wherein the first predetermined axis is extended in a third direction, and the first direction and the third direction are perpendicular to each other; and the first base has a first guiding chute, the first guiding chute is extended along a first circular track, a center of the first circular path is located on the first predetermined axis, and the first circular path is perpendicular to the predetermined axis;
- a first adapter, having a second guiding chute, wherein the second guiding chute is extended in a fourth direction, and the first direction, the third direction and the fourth direction are perpendicular to each other;
- a first connecting portion, slidably fitted with the first guiding chute and the second guiding chute respectively, wherein the first connecting portion is rotatably connected to the first clamping jaw and the second clamping jaw on a corresponding side; and
- a first driving portion, wherein for the first driving portion and the first adapter, the first driving portion is configured to be capable of driving the first adapter to move in the first direction.

15. The wire harness processing device according to claim 14, **characterized in that** the pair of first driving mechanisms share the first driving portion.

16. The wire harness processing device according to claim 14, **characterized in that** the second clamping assembly comprises:
- a wire separation slider, extended in the first direction, wherein one end of the wire separation slider facing the wire harness has a pointed end;
- a pair of third clamping jaws, located at two sides of the wire separation slider respectively;
- a second driving mechanism, connected to the wire separation slider, wherein the second driving mechanism is configured to be capable of driving the wire separation slider to move in the first direction; and
- a third driving mechanism, wherein the wire separation slider is connected to the clamping jaws through the third driving mechanism, and the third driving mechanism is configured to be capable of driving the clamping jaws to approach or get away from the wire separation slider.

17. The wire harness processing device according to claim 16, **characterized in that** the third driving mechanism comprises:
- a second base, wherein the third clamping jaws and the second base are hinged and form third hinge points, the third hinge points are all located on a second predetermined axis, and the second predetermined axis is extended in a fifth direction; the second base has a third guiding chute, the third guiding chute is extended along a second circular track, a center of the second circular path is located on the second predetermined axis, the second circular path is perpendicular to the second predetermined axis, and the first predetermined axis is perpendicular to the first direction;
- a second adapter, having a fourth guiding chute, wherein the fourth guiding chute is extended in a sixth direction, and the first direction, the fifth direction and the sixth direction are perpendicular to each other;
- a second connecting portion, slidably fitted with the third guiding chute and the fourth guiding chute respectively, wherein the second connecting portion is rotatably connected to the third clamping jaw on a corresponding side; and
- a second driving portion, wherein for the second driving portion and the second adapter, the second driving portion is configured to be capable of driving the second adapter to move in the first direction.

18. The wire harness processing device according to claim 17, **characterized in that** the second driving mechanism comprises:
- the second base, having a fifth guiding chute, wherein the fifth guiding chute is extended in the first direction, and the wire separation slider is slidably fitted with the fifth guiding chute; and the wire separating slider has a sixth guiding chute, the sixth guiding chute is extended in a sixth direction, and the second connecting portion is slidably fitted with the second guiding chute.
